# EUROPÄISCHE PATENTANMELDUNG

(11) **EP 2 801 766 A1**
(43) Veröffentlichungstag der Anmeldung: **12.11.2014**
(21) Anmeldenummer: 13167380.8
(22) Anmeldetag: 10.05.2013
(51) Int. Cl.: F24J 2/46, F24J 2/20, F24J 2/22

(54) **Solarkollektor zur Erwärmung eines Wärmeträgers**

(71) Anmelder: voestalpine Polynorm BV, 3751 LJ Bunschoten (NL)
(72) Erfinder: Bauer, Jochen, 73529 Schwäbisch Gmünd (DE); van Mastrigt, John, 3731DL De Bilt (NL); Brummayer, Markus, 4082 Aschach (AT); de Bruin, Maarten Jan, 3871WE Hoevelaken (NL)
(74) Vertreter: Jell, Friedrich

(57) **Zusammenfassung**

Es wird ein Solarkollektor (1) zur Erwärmung eines Wärmeträgers (4) mit einem Absorber (3) gezeigt, wobei der Absorber (3) ein Absorberelement (5), insbesondere Absorberblech, ein, durch Umformen, insbesondere Tiefziehen, profiliertes Wannenblech (6) aus Aluminium oder einer Aluminiumlegierung, mindestens einen sich zwischen Absorberelement (5) und Profilierung (7) des Wannenblechs (6) ausbildenden Kanal (8) zur Führung des Wärmeträgers (4) und wenigstens zwei Anschlussstutzen (9, 10) aufweist, die an den Kanal (8), insbesondere stoffschlüssig, angeschlossen einen Zu- und Ablauf (11, 12) für den Wärmeträger (4) ausbilden. Um einen konstruktiv einfachen und dennoch standfesten Solarkollektor (1) zu schaffen, wird vorgeschlagen, dass die Profilierung (7) am Kanalboden (13) eine in eine Wannenöffnung (14) auslaufende Wannenvertiefung (15) ausbildet, an die der Flansch (16) des jeweiligen, die Wannenöffnung (14) durchgreifenden Anschlussstutzens (9, 10) angeschlossen ist.

## Beschreibung

Die Erfindung betrifft einen Solarkollektor zur Erwärmung eines Wärmeträgers mit einem Absorber, wobei der Absorber ein Absorberelement, insbesondere Absorberblech, ein, durch Umformen, insbesondere Tiefziehen, profiliertes Wannenblech aus Aluminium oder einer Aluminiumlegierung, mindestens einen sich zwischen Absorberelement und Profilierung des Wannenblechs ausbildenden Kanal zur Führung des Wärmeträgers und wenigstens zwei Anschlussstutzen aufweist, die an den Kanal, insbesondere stoffschlüssig, angeschlossen einen Zu- und Ablauf für den Wärmeträger ausbilden.

Aus dem Stand der Technik sind, aus einer Aluminiumlegierung bestehe Absorber für Solarkollektoren bekannt (DE102006003096). Diese Absorber weisen ein oberes planes Absorberblech und ein unteres lötplattiertes Wannenblech auf, das mit einer tiefgezogen Profilierung bzw. Prägung versehen ist und zusammen mit dem Absorberblech einen Kanal zur Führung des indirekt zu erwärmenden Wärmeträgers ausbildet. Zwei zwischen Absorberblech und Wannenblech eingesetzte Anschlussstutzen sind an den Kanal angeschlossen und bilden Zu- und Ablauf für den Wärmeträger des Kanals aus. Absorberblech, Wannenblech und Anschlussstutzen werden für einen festen und flüssigkeitsdichten Konstruktionsverbund miteinander verlötet. Allerdings erfordert ein Verlöten hohe Maß- und Verarbeitungsgenauigkeit, insbesondere im Bereich des Zu- und Ablaufs - unter anderem, um Kriterien wie Flüssigkeitsdichtheit etc. eines Absorbers zu erfüllen. Zudem ist eine Herstellung mithilfe von Verlöten aufwendig und führt in weiterer Folge somit zu entsprechend erhöhten Kosten.

Des Weiteren sind Absorber aus Stahlblech oder aus einem anderen nicht Eisenmetall bekannt (DE102007013919A1), bei denen Zu- und Ablauf am Kanalboden des Wannenblechs tiefgezogen ausgebildet werden - das Erfordernis der Verwendung von Anschlussstücken kann somit wegfallen. Eine derartiges Verfahren auch bei einem Wannenblech aus Aluminium oder einer Aluminiumlegierung anzuwenden bedeutet jedoch, dass dabei vergleichsweise hohe plastische Formänderungen zu bestehen sind - was bei Verwendung von Aluminium oder einer Aluminiumlegierung kaum möglich ist und/oder höchst aufwendige Umformverfahren erfordert. Die Herstellung kostengünstiger Solarkollektoren ist also auch auf diese Weise nicht möglich.

Die Erfindung hat sich daher die Aufgabe gestellt, einen Solarkollektor der eingangs geschilderten Art derart konstruktiv zu verändern, dass dieser kostengünstig und vergleichsweise einfach herzustellen ist und dennoch höchsten Anforderungen in Bezug auf Standfestigkeit, insbesondere Flüssigkeitsdichtheit, gerecht wird.

Die Erfindung löst die gestellte Aufgabe dadurch, dass die Profilierung am Kanalboden eine in eine Wannenöffnung auslaufende Wannenvertiefung ausbildet, an die der Flansch des jeweiligen, die Wannenöffnung durchgreifenden Anschlussstutzens angeschlossen ist.

Bildet die Profilierung am Kanalboden eine in eine Wannenöffnung auslaufende Wannenvertiefung aus, an die der Flansch des jeweiligen, die Wannenöffnung durchgreifenden Anschlussstutzens angeschlossen ist, kann auf konstruktiv einfache Weise ein Übergangsbereich von Kanal in den Zu- bzw. Ablauf geschaffen werden, der unter anderem vergleichsweise hohe Fertigungstoleranzen zulässt - dabei aber dennoch einen flüssigkeitsdichten Absorber sicherstellen kann. Beispielsweise kann der Flansch - auch bei Maßungenauigkeiten an der umgeformten Wannenvertiefung in Kanalrichtung - ausweichend in die Wannenöffnung eingesetzt werden. Durch seinen Flanschbund kann nämlich eine vergleichsweise breite Überlappung mit der Wannenvertiefung sichergestellt werden. Des Weiteren führt diese breite Überlappung auch dazu, dass sich stets eine vergleichsweise großflächige Dicht-und/oder Klebefläche ausbilden kann, womit die Standfestigkeit des Absorbers, insbesondere seine hohe Flüssigkeitsdichtheit, sichergestellt werden kann. Zudem kann sich erfindungsgemäß ein mechanisch besonders stabiler Anschluss ergeben, der auch gegenüber Eigenspannungen ausreichende Festigkeit aufweist - und unterschiedliche Wärmedehnungen zwischen Wannenblech und Anschlussstutzen aufnehmen kann. Ein vereinfacht herzustellender, kostengünstiger und dennoch standfester Solarkollektor kann somit geschaffen werden.

Die Konstruktion des Absorbers kann weiter vereinfacht werden, indem zwischen Wannenvertiefung und Flansch jeweils ein Dichtklebstoff vorgesehen ist. Insbesondere Silikon kann sich als Dichtklebstoff bewähren, um erhöhten Temperaturen am Absorber standzuhalten und dennoch ausgleichend gegen wärmedehnungsbedingte Spannungen zu wirken. Die Standfestigkeit des Solarkollektors kann damit zusätzlich erhöht werden.

Schließen Flansch und Kanalboden miteinander plan ab, können im Flüssigkeitsstrom des Wärmeträgers Turbulenzen vermieden und der Wirkungsgrad der indirekten Wärmeübertragung erhöht werden.

Für einen flüssigkeitsdichten Abschluss kann zwischen Absorberelement und Wannenblech eine geschlossene klebende Randdichtung vorgesehen sein. Auch in diesem Zusammenhang kann sich eine Randdichtung aus Silikon auszeichnen.

Weist das Wannenblech eine vertiefte Profilrinne zur Aufnahme der Randdichtung auf, kann ein planes Aufeinanderliegen von Wannenblech und Absorberelement ermöglicht werden. Dies kann für vergrößerte Dicht- und/oder Klebeflächen sorgen und damit die Flüssigkeitsdichtigkeit verbessern. Die Standfestigkeit des Absorbers kann sich damit weiter erhöhen.

Kontaktkorrosion zwischen Anschlussstutzen und Wannenblech kann vermieden werden, indem die Anschlussstutzen aus Edelstahl bestehen.

Bildet das Wannenblech des Absorbers einen Träger für den Solarkollektor aus, der in einem Gehäuseboden endet sowie eine dem Gehäuseboden abstehende Montagefläche für eine lichtdurchlässige Abdeckung über dem Absorberelement aufweist, kann für besonders einfache Konstruktionsverhältnisse am Solarkollektor gesorgt werden. Der am Solarkollektor durchgehende Absorber bzw. sein am Solarkollektor vorzugsweise allseitig endendes Wannenblech kann zudem eine mechanisch belastbare Montagefläche des Solarkollektors eröffnen, was die Handhabung des Solarkollektors erleichtern kann.

Um die Gefahr einer sich eventuell ausbildenden Kältebrücke über das den Solarkollektor endseitig begrenzende Wannenblech in Richtung des Absorbers zu verringern, kann vorgesehen sein, dass das Wannenblech im Bereich der Montagefläche Trennstege aufweist. Diese Trennstege können am Wannenblech beispielsweise zwischen Öffnungen ausgebilden.

Weist das Wannenblech rückseitig eine Wärmeisolierung auf, können der Wirkungsgrad des Absorbers und somit die Leistung des Solarkollektors erhöht werden. Insbesondere Mineralwolle kann den vergleichsweise hohen Temperaturanforderungen am Solarkollektor genügen.

Indem der Gehäuseboden an die Wärmeisolierung plan anschließt, können sich aufgrund des dadurch ermöglichten Verzichts von rückseitig abstehende Teilen vereinfachte Handhabungsbedingen am Solarkollektor ergeben. Zudem kann den Halt des Solarkollektors am Montageort - da dieser auf ebenen Flächen vollflächig aufgelegt werden kann - verbessert werden.

Die Herstellung des Absorbers kann vereinfacht werden, indem der Kanal endseitige Sammelkanäle und in diese Sammelkanäle einmündende, insbesondere parallele, Strömungskanäle aufweist. Außerdem können durch endseitige Sammelkanäle, die in parallele Strömungskanäle einmünden, die Durchströmung des Absorbers mit Wärmeträger verbessert und in weiterer Folge Wirkungsgrad und Leistungsfähigkeit des Absorbers erhöht werden.

Der Solarkollektor kann äußerst flexibel aufgestellt bzw. mit anderen Solarkollektoren hydraulisch verbunden werden, wenn sich die Sammelkanäle je entlang einer Absorberseite erstrecken und jeweils endseitig einen Anschlussstutzen aufweisen. Der Absorber kann so nämlich mehrere auswählbare Zu- und Ablaufe für den Wärmeträger zur Verfügung stellen. Dies kann für verkürzte Verbindungsleitungen zwischen den Solarkollektoren bzw. für kurze Anschlussleitungen des Solarkollektors an Wärmesenken genützt werden.

Eine Vorrichtung mit mehreren zusammengeschalteten Solarkollektoren kann konstruktiv auf einfache Weise gelöst werden, indem mindestens ein Wellrohr zwei Solarkollektoren über deren Anschlussstutzen miteinander verbindet. Zudem kann dieses Wellrohr Relativbewegungen zwischen den Solarkollektoren kompensieren und eine damit eine standfeste hydraulische Verbindung schaffen.

Die Leitungsverbindungen zu bzw. zwischen den Solarkollektoren können gegenüber Umwelteinflüssen auf einfache Weise geschützt werden, indem die Solarkollektoren mit ihren Gehäuseböden überlappen.

Die Erfindung hat sich außerdem die Aufgabe gestellt, ein Verfahren zu Herstellung eines Wannenbodens eines Solarkollektors zu schaffen, das einfach handzuhaben ist und eine hohe Steifigkeit bzw. Formstabilität aufweist.

Die Erfindung löst die gestellte Aufgabe dadurch, dass ein Aluminiumblech in einem Abkantbiegeschritt zu einem Wannenblech mit einem Kanalboden und mit einer in eine Wannenöffnung auslaufenden Wannenvertiefung profiliert wird.

Wird ein Aluminiumblech in einem Abkantbiegeschritt zu einem Wannenblech mit einem Kanalboden und mit einer in eine Wannenöffnung auslaufenden Wannenvertiefung profiliert, kann mit einem Einzelhubverfahren schnell und kostengünstig - unter Verzicht auf eine mehrteilige Ausführung des Wannenblechs - ein Absorber geschaffen werden. Der Solarkollektor kann damit höchsten Erfordernissen hinsichtlich Standfestigkeit und Funktion gerecht werden.

In den Figuren ist beispielsweise der Erfindungsgegenstand anhand einer Ausführungsvariante näher dargestellt. Es zeigen
- Fig. 1: eine teilweise aufgerissene Draufsicht auf mehrere zusammengeschaltete Solarkollektoren,
- Fig. 2: eine vergrößerte Teilansicht der Fig. 1,
- Fig. 3: eine abgerissene Schnittansicht nach III-III der Fig. 1 und
- Fig. 4: eine vergrößerte Teilansicht der Fig. 3.

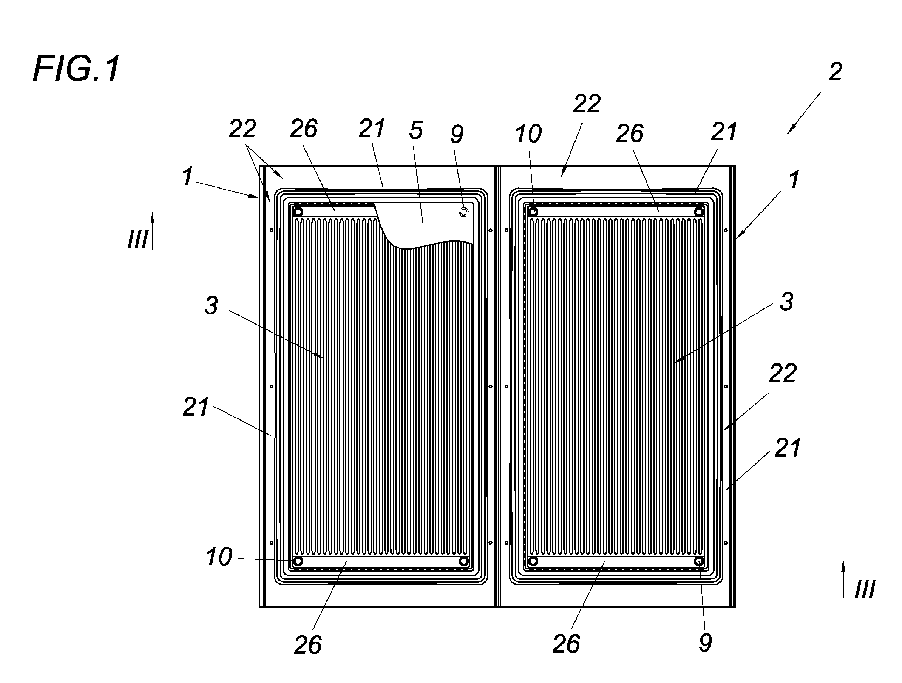

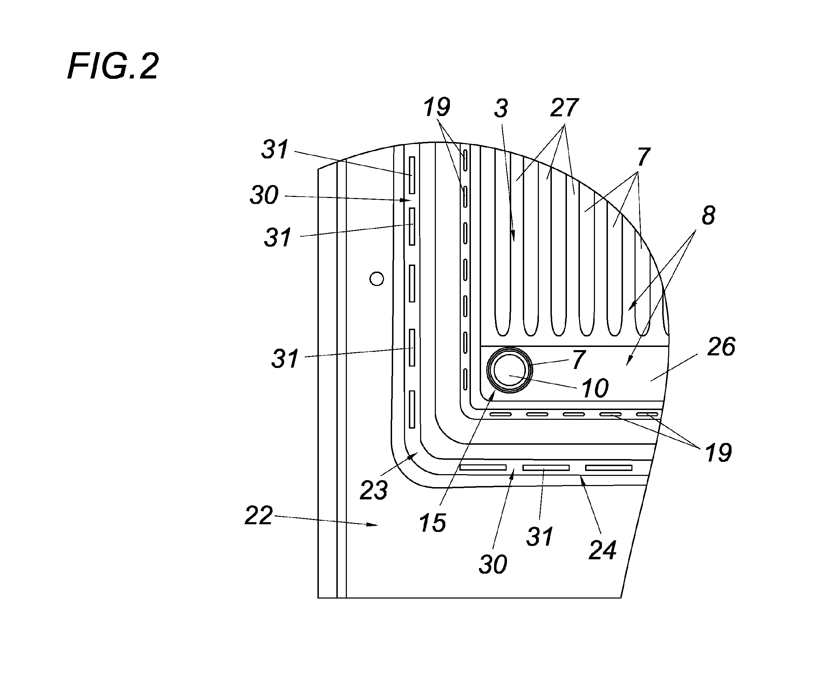

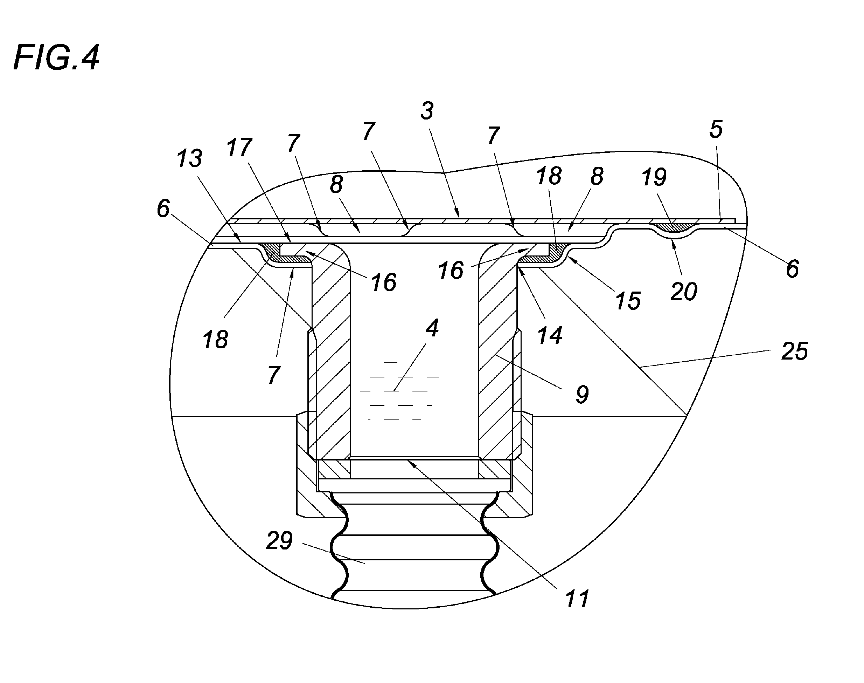

Die nach Fig. 1 dargestellten Solarkollektoren 1 sind zu einer Vorrichtung 2 zusammengeschaltet, um Solarenergie gemeinsam als Kollektorfeld aufzunehmen und einer nicht näher dargestellten thermischen Senke hydraulisch zur Verfügung zu stellen. Die solare Energie wird von einem Absorber 3 aufgenommen und so indirekt auf einen flüssigen Wärmeträger 4, der den Absorber 3 durchströmt, übertragen - wie dies andeutungsweise der Fig. 4 entnommen werden kann. Hierfür sind dem Absorber 3 ein als Absorberblech ausgebildetes Absorberelement 5 und ein Wannenblech 6 aus Aluminium oder einer Aluminiumlegierung zugeordnet. Wie insbesondere in Zusammenschau aus den Figuren 2 und 4 erkannt werden kann, ist dem Wannenblech 6 durch Tiefziehen eine Profilierung 7 vorgegeben. Diese Profilierung 7 wird in einem Abkantbiegeschritt in das Wannenblech 6 eingebracht.

Zwischen der Profilierung 7 und dem Absorberelement 5 bildet sich nun ein Kanal 8 aus, der den Wärmeträger 4 unterhalb des Absorberelements 5 führt. Der Absorber 3 weist zudem Anschlussstutzen 9, 10 aus Edelstahl auf, die an den Kanal 8 stoffschlüssig angeschlossen sind. Diese Anschlussstutzen 9, 10 bilden den Zu- und Ablauf 11, 12 des Absorbers 3 des jeweiligen Solarkollektors 1 aus.

Wie der Fig. 4 weiter entnommen werden kann, bildet die tiefgezogene Profilierung 7 am Kanalboden 13 eine in eine Wannenöffnung 14 auslaufende Wannenvertiefung 15 aus. Diese Wannenvertiefung 15 nimmt den jeweiligen Anschlussstutzen 9, 10 formgenau auf - fordert jedoch beim Tiefziehen des Wannenblechs 6 keine überhöhte Maßhaltung. Der Flansch 16 des jeweiligen, die Wannenöffnung 14 durchgreifenden Anschlussstutzens 9, 10 sorgt nämlich mit seinem Flanschbund 17 für eine ausreichende Flächenüberlappung mit der Wannenvertiefung 15, was eine ausreichende breite Dichtfläche erzeugt. Damit kann der Bereich des Zu- und Ablaufs 11, 12 des Absorbers 3 äußerst standfest ausgebildet werden. Dennoch erfordert diese Maßnahme keinen erhöhten Konstruktionsaufwand, wodurch ein kostengünstiger Solarkollektor 1 geschaffen ist.

Eine vergleichsweise einfach herzustellende stoffschlüssige Verbindung zwischen dem jeweiligen Anschlussstutzen 9, 10 und dem Wannenblech 6 wird geschaffen, indem zwischen Wannenvertiefung und Flansch jeweils ein Dichtklebstoff 18 vorgesehen ist. Besonders Silikon als Dichtklebstoff 18 bewährt sich gegenüber anderen Dichtklebstoffen durch seine hohe Temperatur- und Alterungsbeständigkeit sowie durch seine dauerelastischen, dennoch aber flüssigkeitsdichten Verbindungseigenschaften. Damit werden Eigenspannungen zwischen dem jeweiligen Anschlussstutzen 9, 10 und dem Wannenblech 6 verbessert kompensiert, was die Standfestigkeit der Solarkollektoren 1 deutlich erhöht.

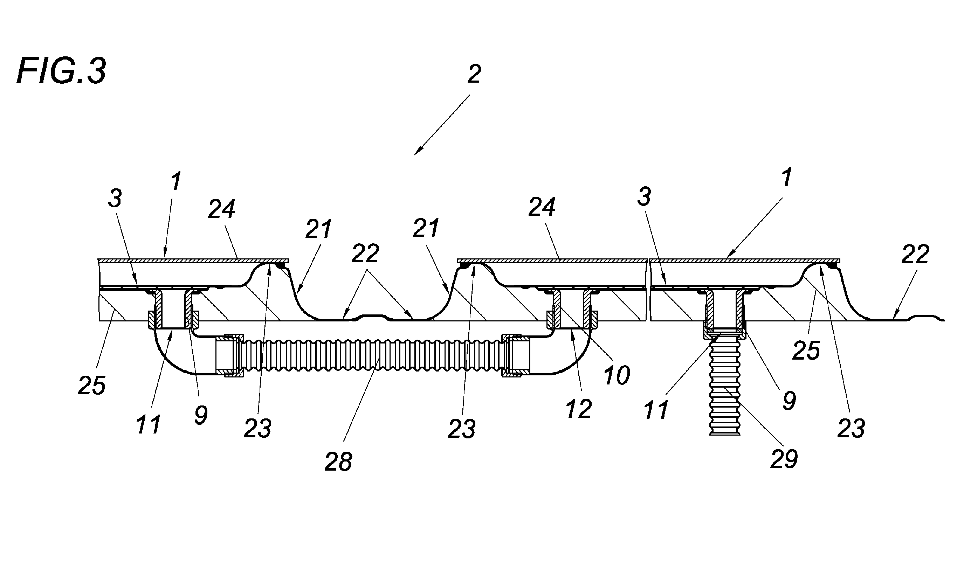

Wie insbesondere in Fig. 3 ersichtlich, liegen Flansch 16 und Kanalboden 13 plan an, was ein homogenes Einströmen des Wärmeträgers 4 in den Kanal 8 sicherstellt.

Zwischen Absorberelement 5 und Wannenblech 6 des jeweiligen Solarkollektors 1 ist eine umlaufende klebende Randdichtung 19 vorgesehen. Auch hier hat sich für diese Randdichtung 19 Silikon als Werkstoff bewährt. Dazu bildet das Wannenblech 6 zur Aufnahme der Randdichtung 19 eine vertiefte und tiefgezogene Profilrinne 20 aus. Damit wird ein planes Anliegen von Absorberelement 5 und Wannenblech 6 möglich. Durch die daraus resultierenden, vergleichsweise großen Dichtflächen wird die Standfestigkeit der Solarkollektoren 1 weiter erhöht.

Wie nach Fig. 3 ersichtlich, vereinfacht sich die Konstruktion eines Solarkollektors 1 besonders, indem das Wannenblech 6 eines Absorbers 3 einen durchgehenden Träger 21 für den Solarkollektor 1 ausbildet. Der Träger 21 endet allseitig in einen Gehäuseboden 22. Zudem bildet der Träger 21 eine dem Gehäuseboden 22 abstehende Montagefläche 23 für eine lichtdurchlässige Abdeckung 24, insbesondere eine Glasplatte, über dem Absorberelement 3 aus.

Wie insbesondere in Fig. 2 zu erkennen, sind im Bereich dieser Montagefläche 23 Öffnungen 31 vorgesehen, die Trennstege 30 am Träger 21 bilden, um damit eine eventuelle Ausbildung einer Kältebrücke zum Absorber 3 hin zu vermindern.

Kältebrücken werden zudem auch durch eine am Träger 21 rückseitig vorgesehene Wärmeisolierung 25, insbesondere aus Mineralwolle, vermieden - siehe Fig. 3. Da der Gehäuseboden 22 an diese Wärmeisolierung 25 plan anschließt, ist außerdem eine breite Aufstellfläche des Solarkollektors 1 geschaffen, was dessen Montage erleichtert.

Wie den Figuren 1 und 2 weiter zu entnehmen, bildet der Kanal 8 endseitige Sammelkanäle 26 und parallele Strömungskanäle 27 aus. Die parallelen Strömungskanäle 27 münden in die Sammelkanäle 26 ein, wodurch ein erhöhter Wirkungsgrad in der indirekten Wärmeübertragung auf den Wärmeträger 4 erreicht wird. Diese sich jeweils entlang einer Absorberseite erstreckenden Sammelkanäle 26 eröffnen auch eine vielfältige Möglichkeit zur Verschaltung der Solarkollektoren 1. Diese Sammelkanäle 26 sind nämlich endseitig jeweils mit einem Anschlussstutzen 9, 10 versehen, wie dies insbesondere der Fig. 1 zu entnehmen ist. Pro Solarkollektoren 1 kann nun zwischen vier Anschlussstutzen 9, 10 gewählt werden - nicht entsprechend verwendete Anschlussstutzen 9, 10 bleiben versiegelt.

Über die Anschlussstutzen 9, 10 sind die Solarkollektoren 1 hydraulisch miteinander verbunden, und zwar über ein Wellrohr 28.

Da die Solarkollektoren 1 mit ihren Wannenböden 22 überlappen, sind auch die an die Anschlussstutzen 9, 10 anschließenden Wellrohre 28, 29 gegenüber Umwelteinflüssen geschützt verlaufend vorgesehen. Die Wellrohre 28 und 29 kompensieren zudem eine relative Bewegung der Solarkollektoren zueinander bzw. zur Aufstellfläche hin, was eine standfeste Vorrichtung 2 schafft.

## Patentansprüche

1. Solarkollektor zur Erwärmung eines Wärmeträgers (4) mit einem Absorber (3), wobei der Absorber (3) ein Absorberelement (5), insbesondere Absorberblech, ein, durch Umformen, insbesondere Tiefziehen, profiliertes Wannenblech (6) aus Aluminium oder einer Aluminiumlegierung, mindestens einen sich zwischen Absorberelement (5) und Profilierung (7) des Wannenblechs (6) ausbildenden Kanal (8) zur Führung des Wärmeträgers (4) und wenigstens zwei Anschlussstutzen (9, 10) aufweist, die an den Kanal (8), insbesondere stoffschlüssig, angeschlossen einen Zu- und Ablauf (11, 12) für den Wärmeträger (4) ausbilden, **dadurch gekennzeichnet, dass** die Profilierung (7) am Kanalboden (13) eine in eine Wannenöffnung (14) auslaufende Wannenvertiefung (15) ausbildet, an die der Flansch (16) des jeweiligen, die Wannenöffnung (14) durchgreifenden Anschlussstutzens (9, 10) angeschlossen ist.

2. Solarkollektor nach Anspruch 1, **dadurch gekennzeichnet, dass** zwischen Wannenvertiefung (15) und Flansch (16) jeweils ein Dichtklebstoff (18), insbesondere Silikon, vorgesehen ist.

3. Solarkollektor nach Anspruch 1 oder 2, **dadurch gekennzeichnet, dass** Flansch (16) und Kanalboden (13) miteinander plan abschließen.

4. Solarkollektor nach Anspruch 1, 2 oder 3, **dadurch gekennzeichnet, dass** zwischen Absorberelement (5) und Wannenblech (6) eine geschlossene klebende Randdichtung (19), insbesondere Silikon, vorgesehen ist.

5. Solarkollektor nach Anspruch 4, **dadurch gekennzeichnet, dass** das Wannenblech (6) eine vertiefte Profilrinne (20) zur Aufnahme der Randdichtung (19) aufweist.

6. Solarkollektor nach einem der Ansprüche 1 bis 5, **dadurch gekennzeichnet, dass** die Anschlussstutzen (9, 10) aus Edelstahl bestehen.

7. Solarkollektor nach einem der Ansprüche 1 bis 6, **dadurch gekennzeichnet, dass** das Wannenblech (6) des Absorbers (3) einen Träger (21) für den Solarkollektor (1) ausbildet, der in einen, insbesondere allseitigen, Gehäuseboden (22) endet sowie eine vom Gehäuseboden (22) abstehende Montagefläche (23) für eine lichtdurchlässige Abdeckung (24) über dem Absorberelement (3) aufweist.

8. Solarkollektor nach Anspruch 7, **dadurch gekennzeichnet, dass** das Wannenblech (6) im Bereich der Montagefläche (23) wärmeisolierende Trennstege (30) aufweist.

9. Solarkollektor nach einem der Ansprüche 1 bis 8, **dadurch gekennzeichnet, dass** das Wannenblech (6) rückseitig eine Wärmeisolierung (25), insbesondere aus Mineralwolle, aufweist.

10. Solarkollektor nach Anspruch 7 und 9, **dadurch gekennzeichnet, dass** der Gehäuseboden (22) an die Wärmeisolierung (25) plan anschließt.

11. Solarkollektor nach einem der Ansprüche 1 bis 10, **dadurch gekennzeichnet, dass** der Kanal (8) endseitige Sammelkanäle (26) und in diese Sammelkanäle (26) einmündende, insbesondere parallele, Strömungskanäle (27) aufweist.

12. Solarkollektor nach Anspruch 11, **dadurch gekennzeichnet, dass** sich die Sammelkanäle (26) jeweils entlang einer Absorberseite erstrecken und jeweils endseitig einen Anschlussstutzen (9, 10) aufweisen.

13. Vorrichtung mit mehreren Solarkollektoren nach einem der Ansprüche 1 bis 12 mit mindestens einem Wellrohr (28), das zwei Solarkollektoren (1) über deren Anschlussstutzen (9, 10) miteinander verbindet.

14. Vorrichtung nach Anspruch 13, **dadurch gekennzeichnet**, die Solarkollektoren (1) mit ihren Gehäuseböden (22) überlappen.

15. Verfahren zur Herstellung eines Wannenblechs (6) eines Absorbers (3) eines Solarkollektors (1) nach einem der Ansprüche 1 bis 12, bei dem ein Aluminiumblech in einem Abkantbiegeschritt zu einem Wannenblech (6) mit einem Kanalboden (13) und mit einer in eine Wannenöffnung (14) auslaufenden Wannenvertiefung (15) profiliert wird.
